# EUROPÄISCHE PATENTSCHRIFT

(11) **EP 1 302 266 B1**
(45) Veröffentlichungstag und Bekanntmachung des Hinweises auf die Patenterteilung: **10.09.2008**
(21) Anmeldenummer: 02013086.0
(22) Anmeldetag: 13.06.2002
(51) Int. Cl.: B23B 31/12

(54) **Bohrfutter**
Drill chuck
Mandrin de forage

(30) Priorität: 10.10.2001 DE 10149958
(43) Veröffentlichungstag der Anmeldung: 16.04.2003
(73) Patentinhaber: Röhm GmbH, 89567 Sontheim (DE)
(72) Erfinder: Mack, Hans-Dieter, 89567 Sontheim (DE)
(74) Vertreter: Hentrich, Swen

(56) Entgegenhaltungen:
- US-A- 4 575 108
- US-A- 4 585 077
- US-A- 5 174 588
- US-A- 5 732 956

## Beschreibung

Schlüssellos zu spannendes Bohrfutter, mit einem an seinem rückwärtigen Ende eine Spindelaufnahme aufweisenden Futterkörper, in dem in geneigt zur Futterachse verlaufenden Führungsaufnahmen Spannbacken geführt sind, die mittels einer Zahnreihe in Eingriff mit dem Spanngewinde eines gegenüber dem Futterkörper drehbar gelagerten Gewinderinges stehen, und mit einer am axial vorderen Ende des Futterkörpers angeordneten, für die Verdrehung des Gewinderinges gegenüber dem Futterkörper vorgesehenen Spannhülse.

Ein derartiges Bohrfutter ist aus der DE 44 38 991 A1 bekannt, das sich dadurch auszeichnet, daß es von Hand gespannt und geöffnet werden kann, ohne daß dazu der Einsatz eines Futterschlüssels erforderlich ist. Das Spannen des Schaftes eines Bohrers oder Werkzeugs erfolgt mit diesem Bohrfutter dergestalt, daß eine Relativdrehung der Spannhülse gegenüber dem Futterkörper ausgeführt wird, durch die auch der mit der Spannhülse gekoppelte Gewindering relativ zum Futterkörper verdreht wird und dabei die Spannbacken verstellt. Zum Öffnen des Bohrfutters muß lediglich die Drehrichtung der Spannhülse relativ zum Futterkörper umgekehrt werden. Problematisch bei derartigen schlüssellos, von Hand zu spannenden Bohrfuttern ist, daß im Betrieb zum Bohren oder Schrauben gleichfalls Kräfte auf die Spannhülse einwirken können, die ein Drehmoment ausüben und eine Relativdrehung der Spannhülse gegenüber dem Futterkörper bewirken können. Dies kann beispielsweise dann der Fall sein, wenn beim Arbeiten unterhalb einer Leiste die Spannhülse des sich im Betrieb drehenden Bohrfutters in Kontakt kommt mit der Leiste und dadurch gebremst wird, während der Futterkörper des Bohrfutters unverändert durch die Bohrspindel angetrieben wird. Je nach Drehrichtung des Bohrfutters kann dies dazu führen, daß sich während des Betriebes die Einspannung lockert und eine ausreichende Betriebssicherheit nicht mehr gegeben ist, oder daß das Bohrfutter so fest gespannt wird, daß es nachfolgend per Hand nicht mehr zu öffnen ist. Neben einem Kontakt ausschließlich an der Stirnfläche der Spannhülse, gegen den Schutz durch einen axial vor der Spannhülse am Futterkörper angeordneten Ring möglich ist, ist ein Kontakt der Spannhülse aber auch an ihren axial weiter zurückliegenden Bereichen möglich, beispielsweise wenn mit dem Bohrfutter in Ecken gearbeitet werden muß.

In der US 4 585 077 ist ein schlüsselbetätigtes Bohrfutter beschrieben, das den Betrieb sowohl in einem Bohrmodus als auch in einem Hammermodus ermöglicht. Zum Schalten zwischen diesen Modi wird eine Schalthülse genutzt, die auf der Spannhülse angeordnet ist und, durch Anschläge begrenzt, um 60° zwischen ihren beiden Schaltzuständen verdreht werden kann.

Der Erfindung liegt daher die Aufgabe zugrunde, ein schlüssellos zu spannendes Bohrfutter der eingangs genannten Art so auszubilden, daß dieses im Betrieb besser gegen ein unbeabsichtigtes Öffnen oder weiteres Schließen geschützt ist. Diese Aufgabe wird bei einem Bohrfutter der eingangs Art dadurch gelöst, daß an dem axial vorderen Ende der Spannhülse eine die Spannhülse außen abdeckende Außenhülse drehbar gelagert ist, so dass im Bohrbetrieb mit dem sich schnell drehenden Bohrfutter sich der Futterkörper mit der Spannhülse innerhalb der Außenhülse dreht, wenn diese abgebremst wird.

Dieses Bohrfutter bietet den Vorteil, daß ein unmittelbarer Kontakt der Spannhülse mit ortsfesten, nicht drehenden Gegenständen im Betrieb durch die Außenhülse verhindert ist, die die Spannhülse abschirmt und deren Drehung zusammen mit dem Futterkörper auch dann ermöglicht, wenn die Außenhülse im Betrieb durch Kontakt mit anderen Gegenständen abgebremst und dadurch relativ zur Spannhülse verdreht wird.

Es hat sich als günstig erwiesen, wenn die Spannhülse an ihrem axial vorderen Ende einen einwärts zum Futterkörper gerichteten Hülsenbund aufweist, den die Außenhülse zur axialen Sicherung gegenüber der Spannhülse mit einer Ringschiene umgreift. Bei dieser Ausführungsform ist die axiale Sicherung der Außenhülse an der Spannhülse radial nach innen und axial nach hinten verlegt, so daß problemlos ein ausreichendes Spiel an der radial außenliegenden Seite der Spannhülse zwischen deren Oberfläche und der Innenfläche der Außenhülse bereit gestellt werden kann.

Dabei ist es vorteilhaft, wenn die Ringschiene einer axial nach vorne gerichteten Schulter des Futterkörpers mit Spiel gegenüberliegend angeordnet ist, da so bei Krafteinwirkungen mit Komponenten in axialer und/oder radialer Richtung eine Abstützung der Außenhülse unmittelbar gegenüber dem Futterkörper möglich ist und die Spannhülse von außen wirkenden Kräften freigehalten wird.

Um auch bei starken äußeren Krafteinwirkungen auf die Außenhülse, die mit deren reversibler, elastischer Deformation verbunden sind, die Schutzwirkung der Außenhülse für die Spannhülse zu erhalten, ist die Innenfläche der Außenhülse als Gleitfläche ausgebildet, so daß die Reibung zwischen der Innenfläche der Außenhülse und der Außenfläche der Spannhülse reduziert und damit eine Drehmitnahme der Spannhülse durch die Außenhülse auch bei größeren Krafteinwirkungen verhindert ist.

Die Ausgestaltung des Bohrfutters kann dabei dergestalt getroffen sein, daß zwischen der Spannhülse und der Außenhülse ein Gleitlager angeordnet ist, um eine weitergehende Reduktion der Reibung zwischen der Spannhülse und der Außenhülse zu erreichen. Alternativ besteht dazu auch die Möglichkeit, daß zwischen der Spannhülse und der Außenhülse ein Kugellager angeordnet ist. Dies läßt sich in besonders einfacher Weise dadurch realisieren, daß der Hülsenbund als Kugelkäfig für das Kugellager gestaltet ist.

Insbesondere bei Vorliegen von Gleitflächen zwischen der Spannhülse und der Außenhülse ist die Montage dieser auf der Spannhülse dann besonders einfach, wenn die Spannhülse an dem von der Außenhülse überdeckten Bereich einen in Umfangsrichtung verlaufenden Ringwulst aufweist, auf dem die Außenhülse aufgesteckt und drehbar gelagert ist. Bei dieser Gestaltung hintergreift die Außenhülse nach Art eines Schnappverschlusses den Ringwulst und ist so gegen axial nach vorn gerichtete Verschiebung gesichert. Es erfolgt dabei eine selbsttätige Zentrierung der Außenhülse, die einen gleichmäßigen Abstand in Umfangsrichtung zwischen der Außenhülse und der Spannhülse sicherstellt, so daß nur an den hinsichtlich der Reibung verminderten Kontaktflächen die drehbare Lagerung erfolgt.

Die vorstehend genannten Vorteile sind auch bei einer Ausführungsform gegeben, die dadurch gekennzeichnet ist, daß die Spannhülse in dem von der Außenhülse überdeckten Bereich eine in Umfangsrichtung verlaufende Ringnut aufweist, in der die Außenhülse zur drehbaren Lagerung mit an der Innenumfangsfläche angeordneten Zapfen gelagert ist.

Bevorzugt ist dabei, wenn die Zapfen in Umfangsrichtung zur Bildung eines Hülsenwulstes verbunden sind, da dies der Anlagerung von Bohrstaub in der Ringnut vorbeugt, der den Leichtlauf der Außenhülse gegenüber der Spannhülse beeinträchtigen könnte.

Besonders einfach und kostengünstig lassen sich die Zapfen herstellen, indem die Zapfen radial von außen in die Außenhülse eingeprägt sind.

Eine Bremswirkung zwischen der Spannhülse und der Außenhülse ist vermieden, wenn der axial rückwärtige Rand der Außenhülse sich zum Ende hin verjüngt und so an dieser Stelle es allenfalls zu einer Linienberührung kommen kann und keine Bremsflächen zur Verfügung stehen.

Günstig ist weiterhin, wenn die Außenhülse die Spannhülse bis über den Bereich von deren Grifffläche außenseitig überdeckt, da so die Außenhülse zugleich eine Schutzfunktion für die Spannhülse übernehmen und darüber hinaus die Möglichkeit besteht, die Außenhülse aus einem hinsichtlich seiner Griffigkeit und Belastbarkeit optimierten Material zu fertigen, während die Spannhülse hinsichtlich anderer Parameter optimiert und aus Kunststoff gefertigt sein kann.

Die Außenhülse kann auch gezielt vom Nutzer ergriffen und dazu genutzt werden, um das Bohrfutter zu Beginn der Arbeiten genau über der Bohrstelle oder über einer Schraube zu zentrieren, wobei diese Zentrierung auch noch nach Beginn der Arbeiten beibehalten werden kann, wenn das Bohrfutter durch die Bohrmaschine angetrieben und gedreht wird, da der Futterkörper sich innerhalb der Außenhülse dreht, also keine Verletzungsgefahr für den Nutzer gegeben ist. Besonders bei kopflastigen Bohrmaschinen wird dies als angenehm empfunden und verbessert die Präszision beim Arbeiten. Vorteilhaft in diesem Zusammenhang ist, daß an der Außenhülse Fingermulden ausgebildet sind, die die Ergonomie verbessern.

Eine weitere bevorzugte Ausführungsform ist dadurch gekennzeichnet, daß die Außenhülse den Futterkörper axial nach vorn überragt. Dies bietet den Vorteil, daß auch beim Kontakt des Bohrfutters mit dem zu bearbeitenden Gegenstand, beispielsweise beim Durchbohren, der Futterkörper nicht gebremst wird, sondern sich relativ zu der dem Gegenstand anliegenden Außenhülse weiter drehen kann.

Im folgenden wird die Erfindung an in der Zeichnung dargestellten Ausführungsbeispielen näher erläutert; es zeigen:
- Fig. 1: eine Seitenansicht des Bohrfutters, links im Schnitt dargestellt,
- Fig. 2: eine der Fig. 1 entsprechende Darstellung einer Ausführungsform mit einem Kugellager,
- Fig. 3: einen Längsschnitt durch eine Außenhülse mit einem Hülsenwulst,
- Fig. 4: das Detail IV aus Fig. 3,
- Fig. 5: eine Seitenansicht eines Bohrfutters mit der in den Fingermulden ergriffenen Außenhülse,
- Fig. 6: eine Sicht aus Richtung des Pfeiles VI in Fig. 5,
- Fig. 7: eine Seitenansicht, teilweise im Schnitt dargestellt, eines Bohrfutters mit der den Futterkörper überragenden Außenhülse,
- Fig. 8: eine der Fig. 7 entsprechende Darstellung einer die Spannhülse axial nahezu vollständig überdeckenden Außenhülse,
- Fig. 9: eine Seitenansicht eines Bohrfutters, teilweise geschnitten dargestellt, mit einer zwei Hülsenwulste aufweisenden, auf der Spannhülse montierten Außenhülse, und
- Fig.10: eine der Fig. 9 entsprechende Darstellung mit in der Außenhülse ausgebildeten Zapfen.

Das in der Zeichnung dargestellte Bohrfutter 1 besitzt einen Futterkörper 2, in dessen axial rückwärtigem Ende eine Spindelaufnahme 3 für den Anschluß des Bohrfutters 1 an eine in der Zeichnung selber nicht dargestellte Bohrspindel ausgebildet ist. Gegenüberliegend, am axial vorderen Ende des Futterkörpers 2 ist eine Werkzeugaufnahme 4 ausgebildet, die durch einen axialen Durchgang 5 mit der Spindelaufnahme 3 verbunden ist, um so den Durchtritt eines in der Bohrspindel axial verstellbar geführten Döppers für den schlagenden Bohrbetrieb mit der unmittelbaren Übertragung der Schlagwirkung auf das Schaftende des in der Werkzeugaufnahme 4 angeordneten Bohrers zu ermöglichen. Dieser Schaft wird in der Werkzeugaufnahme 4 mittels der in geneigt zur Futterachse 5 im Futterkörper 2 ausgebildeten Führungsaufnahmen 6 angeordneten Spannbacken 7 gespannt, wobei zur Ausführung des Spannvorganges und der Verstellung der Spannbacken 7 diese über eine an ihrer radial außenliegenden Seite ausgebildete Zahnreihe 8 verfügen, in die ein gegenüber dem Futterkörper 2 drehbar geführter Gewindering 9 eingreift. Der Gewindering 9 ist in drehmomentübertragender Weise, in dem gezeigten Ausführungsbeispiel über eine Zwischenhülse 10, mit einer Spannhülse 11 gekoppelt, so daß eine Drehung der Spannhülse 11 auch eine Drehung des Gewinderinges 9 und damit die erwünschte Verstellung der Spannbacken 7 bewirkt, so daß dieses Bohrfutter 1 ohne einen Futterschlüssel betätigt werden kann, also ein schlüssellos zu spannendes Bohrfutter 1 darstellt, bei dem die Verstellung der Spannbacken 7 durch eine manuelle Verdrehung der Spannhülse 11 relativ zum Futterkörper 2 erfolgt. Um unerwünschte Verstellungen der Spannbacken 7 zu verhindern, kann die Drehstellung des Gewinderings 9 fixiert werden. Dazu dient eine Sperreinrichtung 12, die aus einem koaxialen Kranz von Sperrausnehmungen 13 an der äußeren Umfangsfläche des Futterkörpers 2 oder eines undrehbar an ihm befestigten Ringes und aus mindestens einem Sperrglied 14 besteht, das unter Federkraft im wesentlichen radial von außen nach innen in die Sperrausnehmungen 13 greift. Das Sperrglied 14 kann in einen aus den Sperrausnehmungen 13 ausgerückten Zustand verstellt werden, wozu das Sperrglied 14 durch eine Steuerkurve 15 an der Spannhülse 11 verstellbar und entsprechend die Spannhülse 11 relativ zum Gewindering 9 verdrehbar ist. Diese Verdrehung der Spannhülse 11 relativ zum Gewindering 9 ist in beiden Drehrichtungen formschlüssig begrenzt, wozu Anschläge 16 zwischen der Spannhülse 11 und der Zwischenhülse 10 vorgesehen sind, die die Drehung des Gewinderinges 9 mit der Spannhülse 11 erzwingen. Die Sperr- oder Verriegelungseinrichtung 12 ist aus der DE 44 38 991 A1 bekannt, so daß sich weitere Erläuterungen hier durch einen Verweis auf die DE 44 38 991 A1 erübrigen.

Um im Bohrbetrieb mit dem sich schnell drehenden Bohrfutter 1 einen Kontakt der Spannhülse 11 mit ortsfesten, sich nicht drehenden Werkstücken zu verhindern, ist an dem axial vorderen Ende der Spannhülse 11 eine die Spannhülse 11 außen abdeckende Außenhülse 17 drehbar gelagert, und zwar an einem Hülsenbund 18, den die Spannhülse 11 an ihrem axial vorderen Ende aufweist. Dieser Hülsenbund 18 ist einwärts zum Futterkörper 2 gerichtet und wird mit einer an der Außenhülse 17 ausgebildeten Ringsschiene 19 umgriffen, so daß der Hülsenbund 18 in einer nach außen gerichteten Ringnut der Ringschiene 19 angeordnet, drehbar gelagert ist.

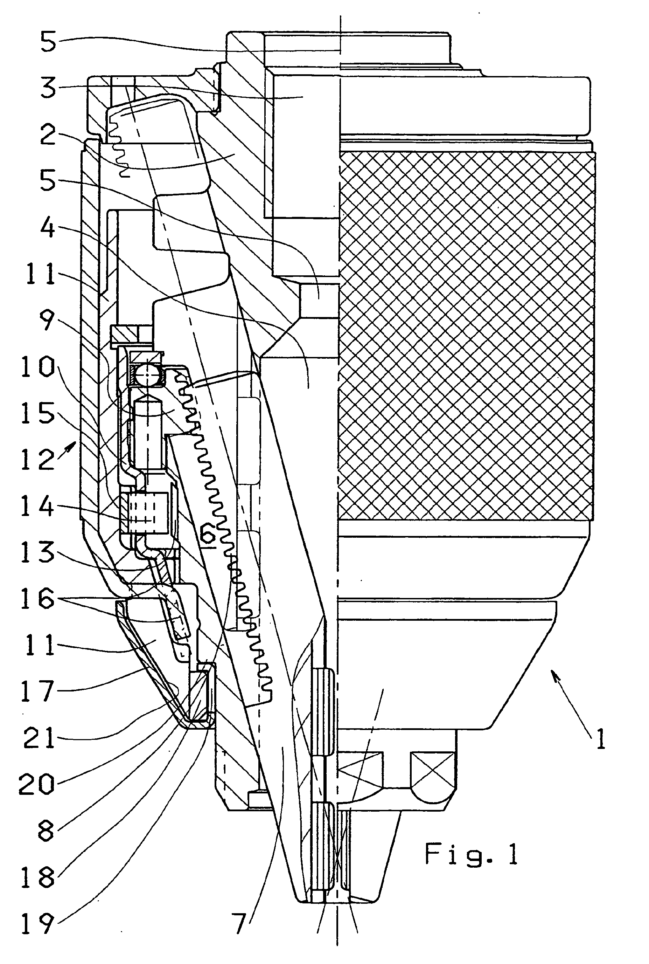

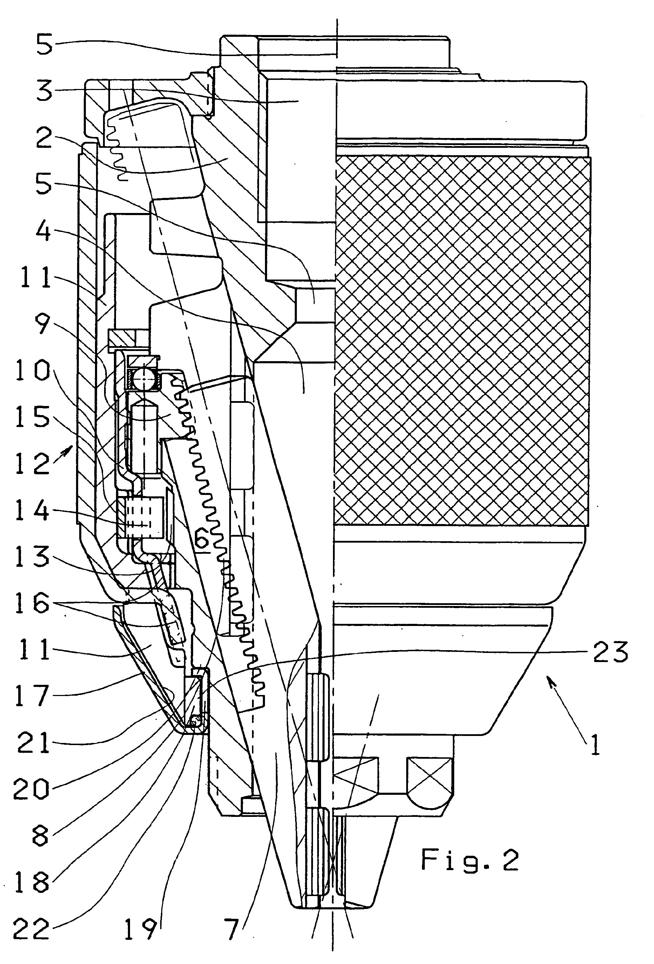

Die Ringschiene 19 ist an einer axial nach vorne gerichteten Schulter 20 des Futterkörpers 2 mit Spiel gegenüberliegend angeordnet und kann sich bei entsprechender Belastung an dieser Ringschulter 20 abstützen, um so eine zu weitgehende Verstellung der Außenhülse 17 mit deren Anlage an der Spannhülse 11 zu vermeiden. Bei dem in der Fig. 1 dargestellten Ausführungsbeispiel ist die Innenfläche der Außenhülse 17 als Gleitfläche 21 ausgebildet. In Fig. 2 ist eine Ausführungsform gezeigt, bei der zwischen der Spannhülse 11 und der Außenhülse 17 ein Kugellager 22 angeordnet ist, bei dem der Hülsenbund 18 als Kugelkäfig 23 fungiert.

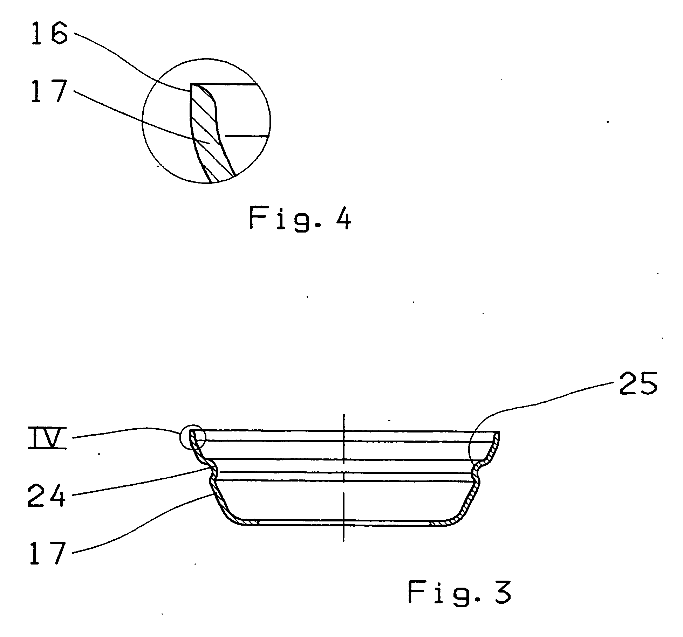

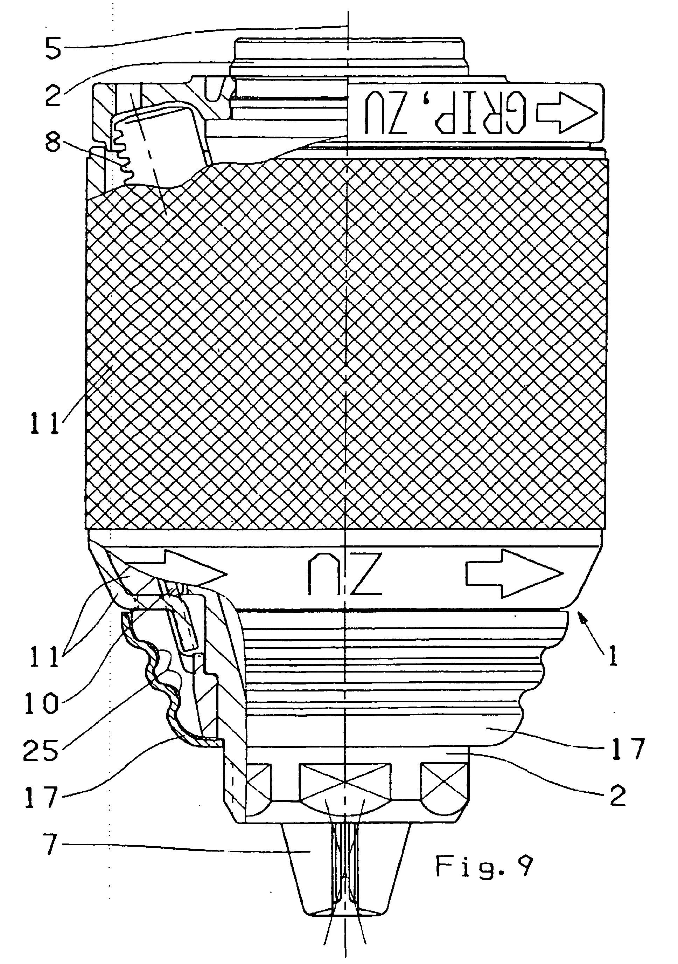

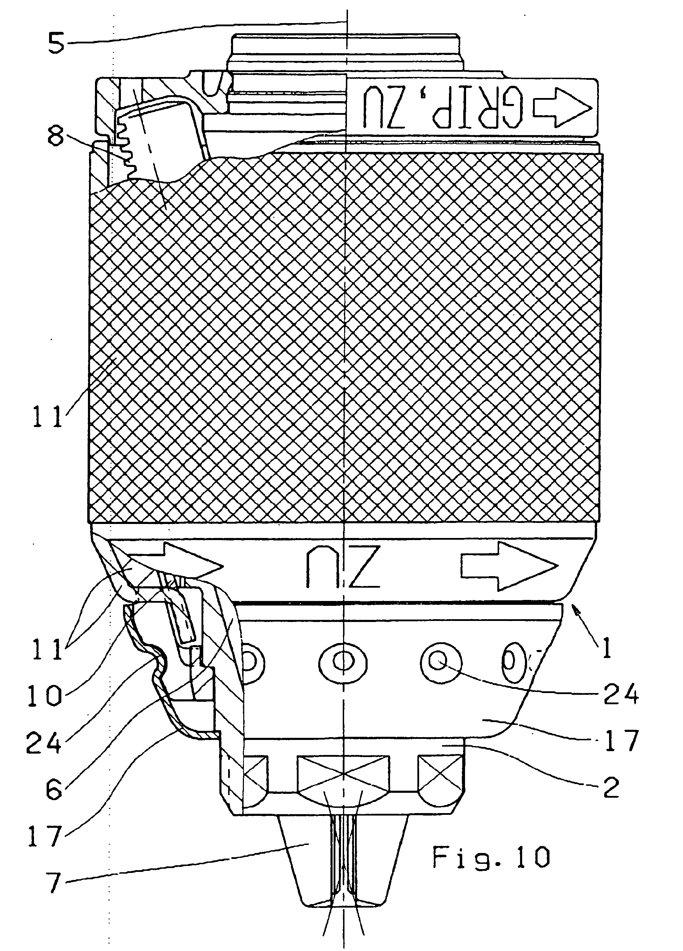

Eine alternative Ausführungsform ist in Fig. 10 mit der Außenhülse 17 gezeigt, an deren Innenumfangsfläche Zapfen 24 angeordnet sind, die in eine in Umfangsrichtung verlaufende Ringnut der Spannhülse 11 eingreifen in dem von der Außenhülse 17 überdeckten Bereich. In dem in Fig. 3 gezeigten Ausführungsbeispiel sind die Zapfen 24 in Umfangsrichtung zur Bildung eines Hülsenwulstes 25 verbunden sind, der in Fig. 9 zweifach vorhanden ist zur besseren Sicherung der Außenhülse gegen axiale Verschiebung. Die Zapfen 24 bzw der Hülsenwulst 25 lassen sich besonders einfach dadurch herstellen, daß diese radial von außen in die Außenhülse 17 eingeprägt werden, wobei dies auch erfolgen kann, nachdem die Außenhülse 17 auf der Spannhülse 11 befestigt worden ist durch ein Formwerkzeug, das zugleich auch die Ringnut in der Spannhülse 11 ausbildet, also in einem Bearbeitungsschritt die erforderlichen Strukturen geschaffen werden, die ein aufeinander abgestimmtes Lagerspiel zwischen der Außenhülse 17 und der Spannhülse 11 ergeben.

Es besteht auch die Möglichkeit, daß die Spannhülse 11 an dem von der Außenhülse 17 überdeckten Bereich einen in Umfangsrichtung verlaufenden Ringwulst aufweist, auf dem die Außenhülse 17 aufgesteckt und drehbar gelagert ist.

Die Fig. 4 zeigt das Detail aus Fig. 3, daß der axial rückwärtige Rand 26 der Außenhülse 17 sich zum Ende hin verjüngt.

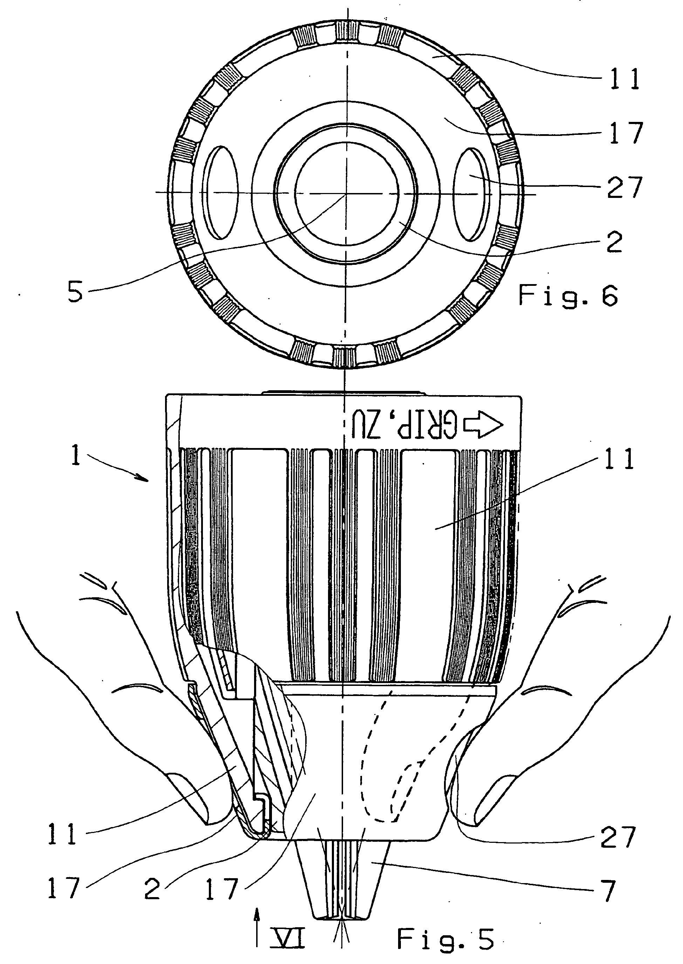

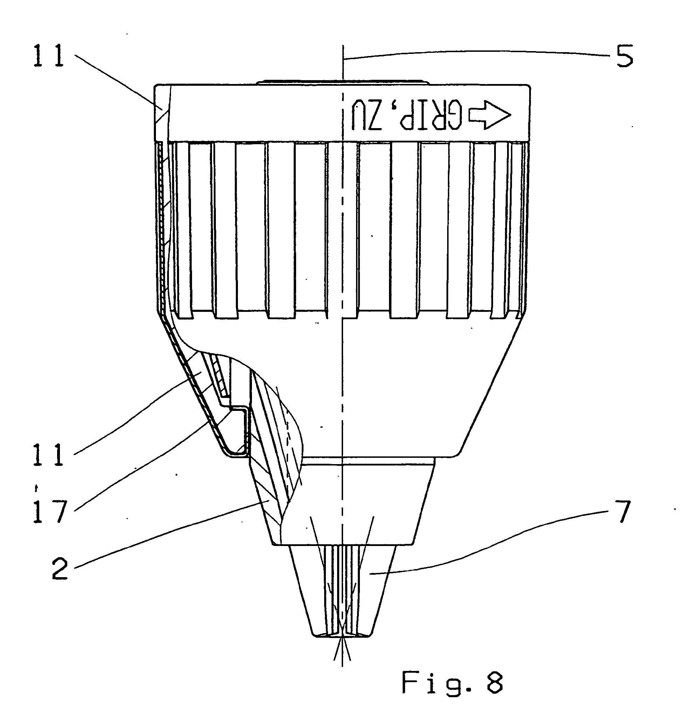

Fig. 8 zeigt ein Bohrfutter 1, bei dem die Außenhülse 17 die Spannhülse 11 über deren nahezu gesamte axiale Länge außenseitig überdeckt; aus den Fig. 5 und 6 ist ersichtlich, daß an der Außenhülse 17 Fingermulden 27 ausgebildet sind, die der besseren Ergreifbarkeit der Außenhülse 17 dienen, wenn diese zum Beginn der Arbeiten mit dem Bohrfutter 1 ergriffen werden soll.

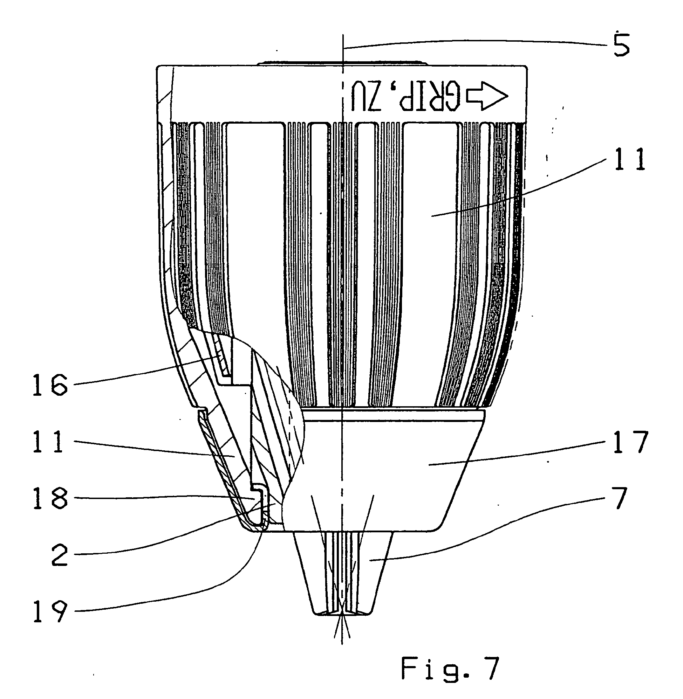

Es besteht weiterhin die Möglichkeit, daß die Außenhülse 11 den Futterkörper 2 axial nach vorn überragt (Fig. 5 und 7).

## Patentansprüche

1. Schlüssellos zu spannendes Bohrfutter, mit einem an seinem rückwärtigen Ende eine Spindelaufnahme (3) aufweisenden Futterkörper (2), in dem in geneigt zur Futterachse (5) verlaufenden Führungsaufnahmen (6) Spannbacken (7) geführt sind, die mittels einer Zahnreihe (8) in Eingriff mit dem Spanngewinde eines gegenüber dem Futterkörper drehbar gelagerten Gewinderinges (9) stehen, und mit einer am axial vorderen Ende des Futterkörpers (2) angeordneten, für die Verdrehung des Gewinderinges (9) gegenüber dem Futterkörper (2) vorgesehenen Spannhülse (11), **dadurch gekennzeichnet, daß** an dem axial vorderen Ende der Spannhülse (11) eine die Spannhülse (11) außen abdeckende Außenhülse (17) drehbar gelagert ist, so dass im Bohrbetrieb mit dem sich schnell drehenden Bohrfutter sich der Futterkörper mit der Spannhülse (11) innerhalb der Außenhülse (17) dreht, wenn diese abgebremst wird.

2. Bohrfutter nach Anspruch 1, **dadurch gekennzeichnet, daß** die Spannhülse (11) an ihrem axial vorderen Ende einen einwärts zum Futterkörper (2) gerichteten Hülsenbund (18) aufweist, den die Außenhülse (17) zur axialen Sicherung gegenüber der Spannhülse (11) mit einer Ringschiene (19) umgreift.

3. Bohrfutter nach Anspruch 2, **dadurch gekennzeichnet, daß** die Ringschiene (19) einer axial nach vorne gerichteten Schulter (20) des Futterkörpers (2) mit Spiel gegenüberliegend angeordnet ist.

4. Bohrfutter nach einem der Ansprüche 1 bis 3, **dadurch gekennzeichnet, daß** die Innenfläche der Außenhülse (17) als Gleitfläche (21) ausgebildet ist.

5. Bohrfutter nach einem der Ansprüche 1 bis 4, **dadurch** gekenntzeichnet, daß zwischen der Spannhülse (11) und der Außenhülse (17) ein Gleitlager angeordnet ist.

6. Bohrfutter nach einem der Ansprüche 1 bis 4, **dadurch gekennzeichnet, daß** zwischen der Spannhülse (11) und der Außenhülse (17) ein Kugellager (22) angeordnet ist.

7. Bohrfutter nach Anspruch 6, **dadurch gekennzeichnet, daß** der Hülsenbund (18) als Kugelkäfig (23) für das Kugellager (22) gestaltet ist.

8. Bohrfutter nach einem der Ansprüche 1 bis 7, **dadurch gekennzeichnet, daß** die Spannhülse (11) an dem von der Außenhülse (17) überdeckten Bereich einen in Umfangsrichtung verlaufenden Ringwulst aufweist, auf dem die Außenhülse (17) aufgesteckt und drehbar gelagert ist.

9. Bohrfutter nach einem der Ansprüche 1 bis 7, **dadurch gekennzeichnet, daß** die Spannhülse (11) in dem von der Außenhülse (17) überdeckten Bereich eine in Umfangsrichtung verlaufende Ringnut aufweist, in der die Außenhülse (17) zur drehbaren Lagerung mit an der Innenumfangsfläche angeordneten Zapfen (24) gelagert ist.

10. Bohrfutter nach Anspruch 9, **dadurch gekennzeichnet, daß** die Zapfen (24) in Umfangsrichtung zur Bildung eines Hülsenwulstes (25) verbunden sind.

11. Bohrfutter nach Anspruch 10, **dadurch gekennzeichnet, daß** die Zapfen (24) radial von außen in die Außenhülse (17) eingeprägt sind.

12. Bohrfutter nach einem der Ansprüche 1 bis 11, **dadurch** gekenntzeichnet, daß der axial rückwärtige Rand (26) der Außenhülse (17) sich zum Ende hin verjüngt.

13. Bohrfutter nach einem der Ansprüche 1 bis 12, **dadurch gekennzeichnet, daß** die Außenhülse (17) die (11) über Spannhülse (11) bis über den Bereich von deren Grifffläche außenseitig überdeckt.

14. Bohrfutter nach einem der Ansprüche 1 bis 13, **dadurch** gekenntzeichnet, daß an der Außenhülse (17) Fingermulden (27) ausgebildet sind.

15. Bohrfutter nach einem der Ansprüche 1 bis 14, **dadurch gekennzeichnet, daß** die Außenhülse (17) den Futterkörper (2) axial nach vorn überragt.

## Claims

1. A drill chuck to be keylessly tightened, comprising a chuck body (2) which at its rearward end has a spindle receiving means (3) and in which clamping jaws (7) are guided in guide receiving means (6) extending inclinedly relative to the chuck axis (5), which clamping jaws are in engagement by means of a row of teeth (8) with the clamping screwthread of a screwthreaded ring (9) mounted rotatably with respect to the chuck body, and a clamping sleeve (11) arranged at the axially front end of the chuck body (2) and provided for rotation of the screwthreaded ring (9) with respect to the chuck body (2), **characterised in that** an external sleeve (17) externally covering the clamping sleeve (11) is rotatably mounted at the axially front end of the clamping sleeve (11) so that in the drilling operation with the drill chuck rotating fast the chuck body rotates with the clamping sleeve (11) within the external sleeve (17) when the latter is braked.

2. A drill chuck according to claim 1 **characterised in that** at its axially front end the clamping sleeve (11) has a sleeve collar (18) which is directed inwardly relative to the chuck body (2) and which the external sleeve (17) embraces with an annular rail (19) for axially securing same with respect to the clamping sleeve (11).

3. A drill chuck according to claim 2 **characterised in that** the annular rail (19) is arranged in opposite relationship with play to an axially forwardly directed shoulder (20) of the chuck body (2).

4. A drill chuck according to one of claims 1 to 3 **characterised in that** the internal surface of the external sleeve (17) is in the form of a sliding surface (21).

5. A drill chuck according to one of claims 1 to 4 **characterised in that** a plain bearing is arranged between the clamping sleeve (11) and the external sleeve (17).

6. A drill chuck according to one of claims 1 to 4 **characterised in that** a ball bearing (22) is arranged between the clamping sleeve (11) and the external sleeve (17).

7. A drill chuck according to claim 6 **characterised in that** the sleeve collar (18) is in the form of a ball cage (23) for the ball bearing (22).

8. A drill chuck according to one of claims 1 to 7 **characterised in that** at the region covered by the external sleeve (17) the clamping sleeve (11) has an annular ridge which extends in the peripheral direction and on which the external sleeve (17) is fitted and rotatably supported.

9. A drill chuck according to one of claims 1 to 7 **characterised in that** in the region covered by the external sleeve (17) the clamping sleeve (11) has an annular groove which extends in the peripheral direction and in which the external sleeve (17) is mounted for rotatable mounting with projections (24) arranged at the inside peripheral surface.

10. A drill chuck according to claim 9 **characterised in that** the projections (24) are joined in the peripheral direction to form a sleeve ridge (25).

11. A drill chuck according to claim 10 **characterised in that** the projections (24) are impressed radially from the outside into the external sleeve (17).

12. A drill chuck according to one of claims 1 to 11 **characterised in that** the axially rearward edge (26) of the external sleeve (17) narrows towards the end.

13. A drill chuck according to one of claims 1 to 12 **characterised in that** the external sleeve (17) covers over the clamping sleeve (11) on the outside to over the region of the grip surface thereof.

14. A drill chuck according to one of claims 1 to 13 **characterised in that** finger depressions (27) are provided on the external sleeve (17).

15. A drill chuck according to one of claims 1 to 14 **characterised in that** the external sleeve (17) projects axially forwardly beyond the chuck body (2).

## Revendications

1. Mandrin de forage serrable sans clé, qui comporte un corps de mandrin (2) présentant à son extrémité arrière un logement de broche (3) à l'intérieur duquel peuvent se déplacer des mâchoires de serrage (7) dans des logements de guidage (6) inclinés par rapport à l'axe de mandrin, ces mâchoires étant en prise par une série de dents (8) avec le filetage de serrage d'une bague filetée (9) montée en rotation par rapport au corps de mandrin, ainsi qu'une douille de serrage (11), disposée à l'extrémité axiale avant du corps de mandrin (2) et prévue pour faire tourner la bague filetée (9) par rapport au corps de mandrin (2), ce mandrin étant **caractérisé en ce qu'**à l'extrémité axiale avant de la douille de serrage (11) est montée en rotation une douille externe (17) recouvrant extérieurement la douille de serrage (11) de sorte qu'en fonctionnement de forage, en même temps que le mandrin de forage tourne rapidement, le corps de mandrin tourne avec sa douille de serrage (11) à l'intérieur de la douille externe (17) si celle-ci est freinée.

2. Mandrin de forage selon la revendication 1, **caractérisé en ce que** la douille de serrage (11) présente à son extrémité axiale avant un collet de douille (18) qui est dirigé vers l'intérieur du corps de mandrin (2) et que la douille externe (17) entoure par un rail annulaire (19) afin de sécuriser axialement ce collet par rapport à la douille de serrage (11).

3. Mandrin de forage selon la revendication 2, **caractérisé en ce que** le rail annulaire (19) est disposé avec un certain jeu en face d'un épaulement (20) que le corps de mandrin (2) présente axialement vers l'avant.

4. Mandrin de forage selon une des revendications 1 à 3, **caractérisé en ce que** la surface interne de la douille externe (17) est une portée de glissement (21).

5. Mandrin de forage selon une des revendications 1 à 4, **caractérisé en ce qu'**un palier de glissement se trouve entre la douille de serrage (11) et la douille externe (17).

6. Mandrin de forage selon une des revendications 1 à 4, **caractérisé en ce qu'**un palier à billes est disposé entre la douille de serrage (11) et la douille externe (17).

7. Mandrin de forage selon la revendication 6, **caractérisé en ce que** le collet de douille (18) a la constitution d'une cage à billes (23) pour le palier à billes (22).

8. Mandrin de forage selon une des revendications 1 à 7, **caractérisé en ce que** la douille de serrage (11) présente sur la zone recouverte par la douille externe (17), un bourrelet annulaire s'étendant périphériquement et sur lequel est emmanchée en pouvant tourner la douille externe (17).

9. Mandrin de forage selon une des revendications 1 à 7, **caractérisé en ce que** la douille de serrage (11) présente sur sa zone qui est recouverte par la douille externe (17), un bourrelet annulaire périphérique dans lequel, afin de pouvoir tourner, la douille externe (17) est montée par des ergots (24) qui sont disposés sur sa surface périphérique interne.

10. Mandrin de forage selon la revendication 9, **caractérisé en ce que** les ergots (24) sont reliés en direction périphérique de manière à former un bourrelet de douille (25).

11. Mandrin de forage selon la revendication 10, **caractérisé en ce que** les ergots (24) sont constitués par des empreintes réalisées radialement de l'extérieur dans la douille externe (17).

12. Mandrin de forage selon une des revendications 1 à 11, **caractérisé en ce que** le bord axialement arrière (26) de la douille externe (17) va en se rétrécissant vers son extrémité.

13. Mandrin de forage selon une des revendications 1 à 12, **caractérisé en ce que** la douille externe (17) recouvre extérieurement la douille de serrage (11) jusque sur la zone de la portée de prise de celle-ci.

14. Mandrin de forage selon une des revendications 1 à 13, **caractérisé en ce que** la douille externe (17) présente des cavités (27) pour le passage des doigts.

15. Mandrin de forage selon une des revendications 1 à 14, **caractérisé en ce que** la douille externe (17) dépasse le corps de mandrin (2) axialement vers l'avant.
